Europäisches Patentamt

European Patent Office

Office européen des brevets

(19)

(11) **EP 0 693 642 B1**

(12) **FASCICULE DE BREVET EUROPEEN**

(45) Date de publication et mention
de la délivrance du brevet:
**24.03.1999 Bulletin 1999/12**

(51) Int Cl.⁶: **F16H 61/06**

(21) Numéro de dépôt: **95401572.3**

(22) Date de dépôt: **30.06.1995**

(54) **Circuit hydraulique d'alimentation et de vidange d'un récepteur de boîte de vitesses automatique**

Hydraulikkreislauf zum Befüllen und Entleeren eines Fluidverbrauchers in einem Automatikgetriebe

Hydraulic circuit for filling and emptying a fluid consumer of an automatic transmission

(84) Etats contractants désignés:
**DE ES GB IT**

(30) Priorité: **22.07.1994 FR 9409077**

(43) Date de publication de la demande:
**24.01.1996 Bulletin 1996/04**

(73) Titulaires:
• **RENAULT**
  **92109 Boulogne-Billancourt (FR)**
• **AUTOMOBILES PEUGEOT**
  **75116 Paris (FR)**
• **AUTOMOBILES CITROEN**
  **92200 Neuilly-sur-Seine (FR)**

(72) Inventeurs:
• **Mercier, Jacques**
  **F-75015 Paris (FR)**
• **Blasutig, Jean-Yves**
  **F-95610 Eragny (FR)**
• **Bremaud, Jean**
  **F-78180 Montigny-Le-Bretonneux (FR)**

(74) Mandataire: **Ernst-Schonberg, Michel et al**
**RENAULT,**
**Service 02 67,**
**860, Quai de Stalingrad**
**92109 Boulogne-Billancourt (FR)**

(56) Documents cités:
**EP-A- 0 564 363**     **DE-A- 4 306 987**
**FR-A- 2 570 458**     **GB-A- 2 029 522**
**GB-A- 2 108 604**     **US-A- 5 076 117**
**US-A- 5 249 655**

## Description

La présente invention se rapporte à la commande hydraulique d'une boîte de vitesses automatique. Plus précisément elle concerne la commande des récepteurs hydrauliques d'une boîte de vitesses automatique, notamment les freins et les embrayages contrôlant le passage des rapports.

Les circuits hydrauliques de commande des récepteurs hydrauliques de boîte de vitesses automatique connus, tels qu'illustrés par la publication FR 2 570 458, comportent des moyens de contrôle du débit de remplissage des récepteurs, mais sont dépourvus de moyens de contrôle de leurs débits de vidange.

La publication EP 0564 363 décrit notamment un dispositif de pilotage universel de boîte de vitesses automatique dans lequel l'alimentation de chaque récepteur est commandée par une électrovanne de séquence, tandis qu'une vanne de progressivité contrôle le transfert partiel de la pression de ligne en direction d'un absorbeur de débit.

Par la publication GB A 2029 522, il est connu de contrôler le passage du second sur le troisième rapport d'une transmission automatique au moyen d'une vanne de séquence basculant entre deux états où elle autorise respectivement la vidange progressive d'un frein, et la vidange franche de celui-ci.

La présente invention vise à obtenir une limitation précise du débit de vidange des récepteurs d'une boîte automatique.

Elle propose dans ce but que son circuit hydraulique de commande présente une vanne de contrôle de vidange de plusieurs récepteurs pouvant basculer entre deux positions autorisant respectivement une chute de pression progressive dans le récepteur vidangé au travers d'un gicleur calibré de vidange distinct du gicleur calibré de remplissage, et une vidange franche du récepteur par l'intermédiaire du gicleur calibré de vidange et d'un passage gros trou de mise à la bâche.

Un autre aspect de l'invention consiste à contrôler la montée en pression dans les récepteurs, lors de leur remplissage.

L'invention prévoit dans cet objectif un absorbeur de débit contrôlé par une vanne de mise en service pouvant basculer entre deux positions.

L'invention vise également à assurer le contrôle des moyens de vidange des récepteurs hydrauliques d'une boîte de vitesses automatique.

Conformément à l'invention, le circuit hydraulique comporte à cet effet une vanne de contrôle de vidange pouvant basculer entre deux positions dans lesquelles elle autorise respectivement une chute de pression progressive dans le récepteur au travers du gicleur calibré de vidange seul, et une vidange franche par l'intermédiaire du gicleur calibré de vidange et d'un passage gros trou de mise à la bâche.

Selon un mode de réalisation de l'invention, la vidange de plusieurs récepteurs est contrôlée par la même vanne de contrôle de vidange.

Selon un mode de réalisation de l'invention, la pression de ligne PL est dirigée simultanément vers la vanne de séquence et vers l'absorbeur de débit.

Selon un mode de réalisation de l'invention, le gicleur calibré de vidande autorise un débit inférieur à celui du gicleur calibré de remplissage.

Selon un mode de réalisation de l'invention, la vidange franche du récepteur est assurée par la mise en repos de la vanne de séquence, de la vanne de mise en service de l'absorbeur de débit, et de la vanne de contrôle de vidange.

Selon un mode de réalisation de l'invention, l'alimentation du récepteur est déclenchée par l'activation de la vanne de séquence.

Selon un mode de réalisation de l'invention, la chute de pression progressive du récepteur résulte de l'activation de la vanne de contrôle de vidange.

L'invention sera mieux comprise à la lecture de la description suivante d'un mode de réalisation particulier de celle-ci, en se reportant au dessin annexé, sur lequel la figure unique représente de façon schématique le circuit de commande proposé par l'invention.

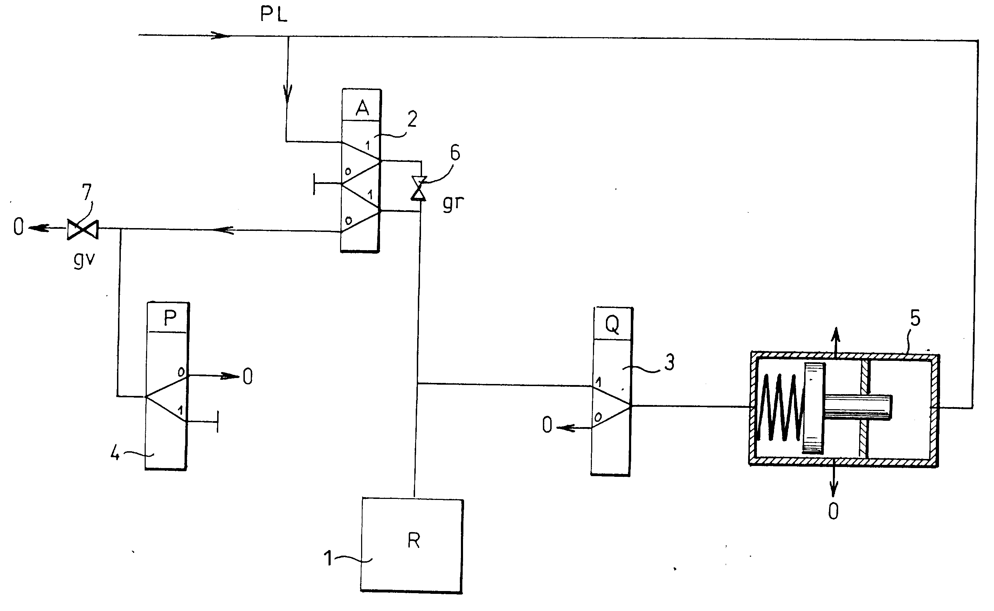

Le circuit hydraulique illustré par la figure 1 assure l'alimentation en fluide hydraulique d'un récepteur hydraulique (R) 1, à partir de la pression de ligne PL, et la vidange ou "mise à la bâche" de celui-ci. Il comporte à cet effet trois électrovannes (A, Q, P) 2, 3, 4 et un absorbeur de débit 5.

Comme l'indique le schéma, la pression de ligne PL est dirigée simultanément vers la première vanne A ou vanne de séquence 2, et vers l'absorbeur de débit 5. En sortie de la vanne de séquence 2, le fluide traverse un premier gicleur (gr), ou gicleur de remplissage 6, assurant le contrôle du débit de remplissage du récepteur (R) 1.

La seconde vanne ou vanne de mise en service 3 (ou hors service) de l'absorbeur de débit 5 permet dans son état activé Q de diriger une partie de la pression issue du gicleur de remplissage (gr) 6 vers l'absorbeur de débit 5, donc d'obtenir une montée progressive en pression dans le récepteur (R) 1.

Un second gicleur calibré (gυ), ou gicleur de vidange 7, permet d'obtenir une chute de pression progressive, selon un débit déterminé, qui pourra avantageusement être inférieur à celui du gicleur de remplissage (gr) 6. Enfin une troisième vanne 4, ou vanne de contrôle de vidange permet, dans son état activé P, de limiter le débit à celui du gicleur de vidange 7, tandis que dans son état de repos $\bar{P}$ elle autorise simultanément l'écoulement du fluide vers la bâche au travers d'un orifice "gros trou" (non représenté).

Le remplissage du récepteur 1 s'effectue de la façon suivante. En situation de départ, c'est-à-dire lorsque le récepteur est vidangé, les trois vannes 2, 3, 4 sont en état de repos $\bar{A}$, $\bar{P}$, $\bar{Q}$ (o, o, o). Le récepteur 1 est alors à la bâche par le gicleur de vidange (gυ) 7 et par un passage "gros trou" en sortie de la vanne de contrôle de vidange 4. Par ailleurs, l'absorbeur de débit 5 est hors service, sa vanne de mise en service 3 étant en position de repos $\overline{Q}$.

Le remplissage du récepteur 1 est déclenché par l'activation de la vanne de séquence 2. L'état A, $\overline{P}$, $\overline{Q}$ (1, o, o) du système se traduit par le remplissage du récepteur 1 au travers du gicleur calibré de remplissage (gr) 6, tandis que l'absorbeur de débit 5 reste au repos.

L'activation de la vanne de mise en service de l'absorbeur 5 (état A, $\overline{P}$, Q soit 1, o, 1 du système) permet ensuite d'obtenir, en fin de remplissage, une montée progressive en pression dans le récepteur 1.

Lorsque le passage de vitesse est terminé, l'absorbeur 5 est mis au repos. Le système retrouve l'état A, $\overline{P}$, $\overline{Q}$ (1, o, o), le récepteur 1 étant rempli, et l'absorbeur 5 mis hors circuit.

La vidange du récepteur 1 est préparée par l'activation de la vanne de contrôle de vidange 4, qui place le système en position A, P, $\overline{Q}$, (1, 1, o) dans laquelle seul le gicleur de vidange (gv) 7 est en service dans le circuit de vidange.

La prévidange du récepteur 1 par le gicleur (gv) 7 déclenchée par la mise au repos de la vanne de séquence 2 l'état $\overline{A}$, P, $\overline{Q}$ (o, 1, o) se traduisant par une chute contrôlée de la pression dans le récepteur 1.

Enfin, la mise au repos de la vanne de contrôle de vidange 4 (état $\overline{A}$, $\overline{P}$, $\overline{Q}$ soit o, o, o) assure la vidange franche du récepteur 1 par la mise en service d'un gros trou de mise à la bâche, en sortie de la vanne de contrôle de vidange 4.

L'invention s'applique à la commande de tous les récepteurs hydrauliques, embrayages ou freins, d'une boîte de vitesses automatique. Par ailleurs, il est possible d'utiliser la même vanne de mise en service de l'absorbeur de débit et la même vanne de contrôle de vidange pour la commande de tous les récepteurs disposant d'une prévidange et/ou d'une montée en pression contrôlée.

En conclusion, l'invention permet de façon simple d'intégrer des moyens de contrôle efficaces du débit de vidange d'un ou plusieurs récepteurs hydrauliques dans un circuit de commande de boîte de vitesses automatique.

## Revendications

1. Circuit hydraulique de commande des récepteurs hydrauliques (1) d'une boîte de vitesses automatique comportant d'une part, une vanne de séquence (2) pouvant basculer entre un premier état où elle autorise le remplissage d'un récepteur (1) au travers d'un gicleur calibré de remplissage (6) disposé en sortie de celle-ci et un second état où elle coupe l'alimentation hydraulique du récepteur (1) tout en autorisant sa vidange, et d'autre part, un absorbeur de débit (5) contrôlé par une vanne de mise en service (3) pouvant basculer entre deux positions, caractérisé en ce que la vidange de plusieurs récepteurs est controlée par une même vanne de contrôle de vidange (4) pouvant basculer entre deux positions autorisant respectivement une chute de pression progressive dans le récepteur vidangé au travers d'un gicleur calibré de vidange (7) distinct du gicleur calibré de remplissage (6), et une vidange franche du même récepteur par l'intermédiaire du gicleur calibré de vidange (7), et d'un passage gros trou de mise à la bâche.

2. Circuit hydraulique de commande selon la revendication 1, caractérisé en ce que le remplissage de plusieurs récepteurs (1) est contrôlé par la même vanne de mise en service (3) de l'absorbeur de débit (4).

3. Circuit hydraulique de commande selon la revendication 1 ou 2, caractérisé en ce que la pression de ligne PL est dirigée simultanément vers la vanne de séquence (2) et vers l'absorbeur de débit (5).

4. Circuit hydraulique de commande selon la revendication 1, 2 ou 3, caractérisé en ce que le gicleur calibré de vidange (7) autorise un débit inférieur à celui du gicleur calibré de remplissage (6).

5. Circuit hydraulique de commande selon l'une des revendications précédentes, caractérisé en ce que la vidange franche du récepteur (1) est assurée par la mise en repos de la vanne de séquence (2), de la vanne de mise en service (3) de l'absorbeur (5), et de la vanne de contrôle de vidange (4).

6. Circuit hydraulique de commande selon la revendication 5, caractérisé en ce que l'alimentation du récepteur (1) est déclenchée par l'activation de la vanne de séquence (2).

7. Circuit hydraulique de commande selon les revendications 5 ou 6, caractérisé en ce que la chute de pression progressive du récepteur (1) résulte de l'activation de la vanne de contrôle de vidange (4).

## Patentansprüche

1. Hydraulikkreis zur Steuerung der Hydraulikbehälter (1) eines automatischen Getriebes, der folgendes umfaßt: einerseits ein Sequenzventil (2), das zwischen einem ersten Zustand, in dem es die Füllung eines Behälters (1) durch eine an seinem Ausgang vorgesehene kalibrierte Fülldüse (6) ermöglicht, und einem zweiten Zustand, in dem es die hydraulische Speisung des Behälters (1) unterbricht und gleichzeitig die Entleerung ermöglicht, hin- und herschwingen kann, und andererseits einen Durchflußabsorber (5), der durch ein Inbetriebnahmeventil (3) gesteuert wird, das zwischen zwei Positionen hin- und herschwingen kann, dadurch gekennzeichnet, daß die Entleerung mehrerer Behälter durch dasselbe Entleerungssteuerungsventil (4) gesteuert wird, das zwischen zwei Positionen hin- und herschwingen kann, die folgendes ermöglichen: einen allmählichen Druckabfall im Behälter, der durch eine kalibrierte Entleerungsdüse (7), die sich von der kalibrierten Fülldüse (6) unterscheidet, geleert wird, bzw. eine schlagartige Entleerung desselben Behälters mittels der kalibrierten Entleerungsdüse (7) und einem Durchlaß mit großer Öffnung zur Sammlung im Sammelbehälter.

2.  Hydraulikkreis zur Steuerung nach Anspruch 1, dadurch gekennzeichnet, daß die Füllung mehrerer Behälter (1) durch dasselbe Ventil (3) zur Inbetriebnahme des Durchflußabsorbers (5) gesteuert wird.

3.  Hydraulikkreis zur Steuerung nach Anspruch 1 oder 2, dadurch gekennzeichnet daß der Leitungsdruck PL gleichzeitig auf das Sequenzventil (2) und den Durchflußabsorber (5) gerichtet wird.

4.  Hydraulikkreis zur Steuerung nach Anspruch 1, 2 oder 3, dadurch gekennzeichnet, daß die kalibrierte Entleerungsdüse (7) einen Durchfluß ermöglicht, der geringer ist als derjenige der kalibrierten Fülldüse (6).

5.  Hydraulikkreis zur Steuerung nach einem der obigen Ansprüche, dadurch gekennzeichnet, daß die komplette Entleerung des Behälters (1) durch die Ruhestellung des Sequenzventils (2), des Ventils (3) zur Inbetriebnahme des Durchflußabsorbers (5) und des Entleerungssteuerungsventils (4) gewährleistet wird.

6.  Hydraulikkreis zur Steuerung nach Anspruch 5, dadurch gekennzeichnet, daß die Speisung des Behälters (1) durch die Aktivierung des Sequenzventils (2) ausgelöst wird.

7.  Hydraulikkreis zur Steuerung nach Anspruch 5 oder 6, dadurch gekennzeichnet, daß der allmähliche Druckabfall im Behälter (1) aus der Aktivierung des Entleerungssteuerungsventils (4) resultiert.

## Claims

1.  Hydraulic control circuit for hydraulic receptors (1) of an automatic gearbox comprising on the one hand a sequence valve (2) which can switch between a first state in which it allows the filling of a receptor (1) through a calibrated filling nozzle (6) arranged at the outlet thereof, and a second state in which it cuts off the hydraulic supply to the receptor (1) while allowing its drainage, and on the other hand, a flow absorber (5) controlled by an operating valve (3) which can switch between two positions, characterised in that the drainage of a plurality of receptors is controlled by the same drainage control valve (4) which can switch between two positions allowing respectively a progressive drop in pressure in the drained receptor through a calibrated drainage nozzle (7) distinct from the calibrated filling nozzle (6), and free drainage of the same receptor by means of the calibrated drainage nozzle (7) and a large-hole passage to the reservoir.

2.  Hydraulic control circuit according to claim 1, characterised in that the filling of a plurality of receptors (1) is controlled by the same operating valve (3) of the flow absorber (4).

3.  Hydraulic control circuit according to claim 1 or 2, characterised in that the line pressure PL is directed simultaneously towards the sequence valve (2) and towards the flow absorber (5).

4.  Hydraulic control circuit according to claim 1, 2 or 3, characterised in that the calibrated drainage nozzle (7) allows a discharge rate lower than that of the calibrated filling nozzle (6).

5.  Hydraulic control circuit according to one of the preceding claims, characterised in that the free drainage of the receptor (1) is provided by making the sequence valve (2), the operating valve (3) of the flow absorber (5) and the drainage control valve (4) inoperative.

6.  Hydraulic control circuit according to claim 5, characterised in that the supply to the receptor (1) is triggered by activation of the sequence valve (2).

7.  Hydraulic control circuit according to claims 5 or 6, characterised in that the progressive drop in pressure of the receptor (1) results from activation of the drainage control valve (4).